# EUROPEAN PATENT APPLICATION

(11) **EP 1 168 259 A2**
(43) Date of publication of application: **02.01.2002**
(21) Application number: 01113297.4
(22) Date of filing: 31.05.2001
(51) Int. Cl.: G07F 7/10

(54) **Data management method and system for IC card**

(30) Priority: 28.06.2000 JP 2000194840
(71) Applicant: Hitachi, Ltd., Chiyoda-ku, Tokyo 101-8010 (JP); HITACHI CAPITAL CORPORATION, TOKYO (JP)
(72) Inventor: Sakashita, Masahiro, c/o Hitachi, Ltd., Chiyoda-ku, Tokyo 100-8220 (JP); Nakagawa, Masayuki, c/o Hitachi, Ltd., Chiyoda-ku, Tokyo 100-8220 (JP); Ishibashi, Akira, c/o Hitachi, Ltd., Chiyoda-ku, Tokyo 100-8220 (JP); Yoda, Takao, c/o Hitachi Capital Corporation, Tokyo 105-0003 (JP); Takeda, Masashi, c/o Hitachi Capital Corporation, Tokyo 105-0003 (JP)
(74) Representative: Strehl Schübel-Hopf & Partner

(57) **Abstract**

An IC card system in which information such as password stored within an IC card (100) can be changed off line by only the process within the card, and the result can also be reflected on a host (300) that issued the IC card. The user, trying to change the password of the IC card, inserts the IC card into an IC card reader/writer connected to a user's personal computer (PC) (200) or the like, selects an information change mode as one of the applications using the IC card, and enters a piece of information that is previously set for being irrevocable. The processor within the PC compares the inputted information with the information stored within the card. If the inputted information is correct, the user is urged to select a desired one of the indicated items of information, entering new information so that it can be registered within the card.

## Description

### BACKGROUND OF THE INVENTION

The present invention relates to a process method and system of data management for IC card, and more particularly to a method of changing information stored in IC card and information to be managed in center-side facility, and to an IC card system.

IC cards are widely used as financial card, credit card and so on. These cards issued so far have stored therein various kinds of their own personal information such as name, address, postal code, phone number, birth date, password, financial institution name, branch name, kind of account, account number, and mode of payment, and data and program necessary for application process according to the intended use of IC card. These information items are usually previously stored in an IC card at the time of issuing the IC card. Therefore, when wanting to change the information previously stored in the IC card after the issue, the user is required to ask an agency or organization that issued his IC card about changing the information. The user also must sign and seal on a sheet (request form for change) that the issuing organization provides, and send the form together with the IC card to the issuing organization.

### SUMMARY OF THE INVENTION

Since the user is needed to take such troublesome procedure for the change of information of IC card, the password is actually almost not changed that should be regularly changed for preventing unauthorized use of IC card in business.

Accordingly, it is an object of the invention to provide a method and system for changing IC card information with the above problems solved, that is, the method and system capable of changing the information stored in IC card independently of the information that the center-side facility manages, and reflecting the change of the IC card information on the information managed by the center-side facility.

The above object can be achieved by providing an IC card system that comprises IC cards each having stored therein user's information of a plurality of items, and a center apparatus; each of said IC cards having a recording area in which change allowance information indicative of whether the user's information is in the process of changing or not is registered, and making operations of deciding if the user's information is in the process of changing by referring to the change allowance information when a request for changing the user's information occurs, setting the change allowance information for "changing" if it is not in the process of changing, receiving an item of the user's information that should be changed, registering it into the IC card, and transmitting the changed user's information to the center apparatus; and said center apparatus then receiving the changed user's information, registering it into itself, and resetting the change allowance information of the IC card.

The change of the information stored within the IC card may be reflected on the center apparatus at the time of first on-line transaction after the change. In addition, the IC cards used in the IC card system each can add a change-enabling identifier to variable information and store it as changeable information, and each can add a change-disabling identifier to irrevocable information and store it as irrevocable information, or in a form incapable of being taken out (that cannot be accessed to from the outside).

The above object can also be achieved by use of a program capable of executing the above functions or a recording medium in which such program is previously stored.

### BRIEF DESCRIPTION OF THE DRAWINGS

Fig. 1 is a block diagram schematically showing the construction of an IC card system according to the invention.
Fig. 2 is a flowchart to which reference is made in explaining an operation of changing information on the IC card-side apparatus.
Fig. 3 is a flowchart to which reference is made in explaining an operation of changing information on the center-side apparatus.
Fig. 4 is a flowchart to which reference is made in explaining an operation of changing information on the center-side apparatus.
Fig. 5 is a flowchart to which reference is made in explaining an operation of changing information on the center-side apparatus.
Fig. 6 is a diagram to which reference is made in explaining the contents of information to be managed in DB of the center-side apparatus.
Fig. 7 is a diagram to which reference is made in explaining the contents of information to be managed in a storage portion of the IC card-side apparatus.

### DETAILED DESCRIPTION OF THE EMBODIMENTS

Embodiments of an IC card information changing method and IC card system according to the invention will be described in detail with reference to the accompanying drawings. The change of internal information of IC card according to the invention is performed by connecting an IC card reader/writer to a PC (personal computer) of a user, inserting the IC card into this reader/writer, and making operations according to the invention. The following description will be made about only the processing operations. In addition, the programs for executing the processing method of the embodiments according to the invention can be provided by storing them in recording media such as CD, MO or DVD.

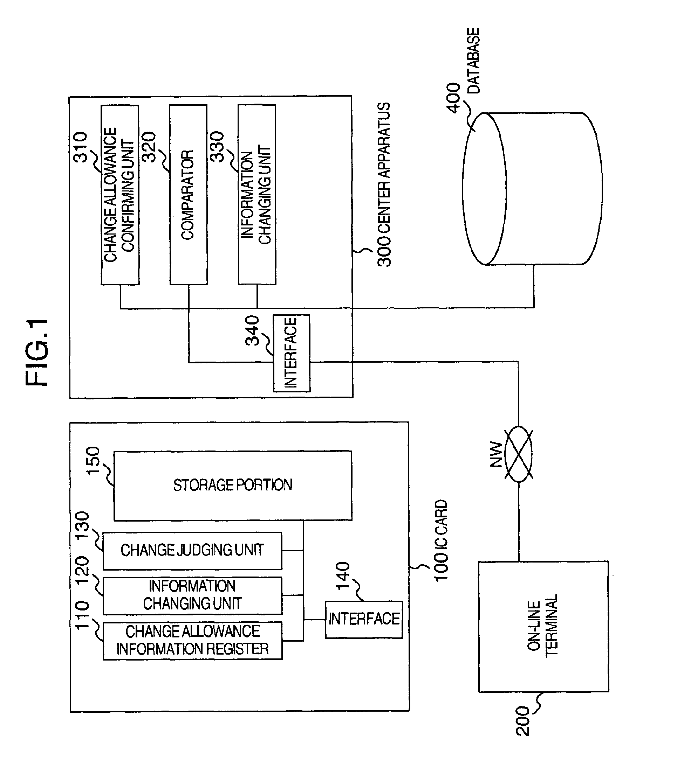

As illustrated in Fig. 1, an IC card 100 according to the invention has a change allowance information register 110 which registers information indicating whether or not to allow a change, an information changing unit 120, a change judging unit 130, an interface 140 and a storage portion 150. The change of information stored in this IC card is reflected through an on-line terminal 200 on the information managed by a center-side apparatus 300.

The center-side apparatus 300 has a change allowance confirming unit 310 which confirms whether a change has been allowed or not, a comparator 320, an information changing unit 330, an interface 340 and a database 400. The change allowance information register 110, information changing unit 120, change judging unit 130 and interface 140 can be incorporated in the on-line terminal 200.

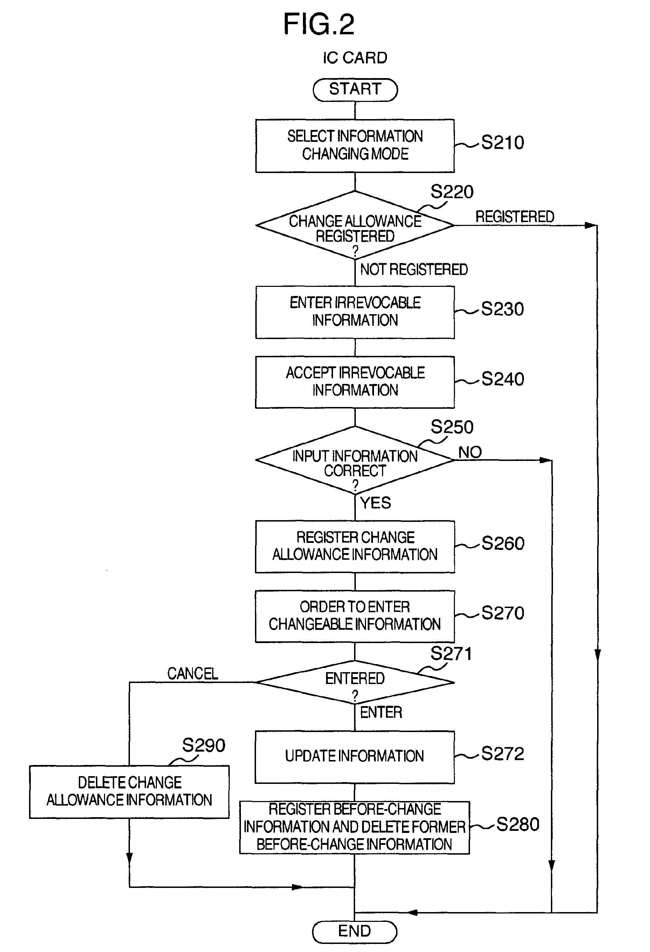

Fig. 2 is a flowchart to which reference is made in explaining the process for changing the internal information of the IC card 100 according to one embodiment of the invention. This process will be described below. It is assumed here that the IC card 100 of which the internal information can be changed according to the embodiment of the invention has information such as user's name, birth date, postal code, phone number, address (which may be only the last numerical portion of address or number of lot) and password previously stored as items for identification. For example, the name and birth date of the above information have write-disabling identifiers added to disable from altering, and stored in the IC card 100 in an output-unable form in which those items information cannot be leaked to the outside. The postal code, phone number, address (which may be only number of lots) and password have write-enabling identifiers added to be rewritable, and are stored in the IC card 100.

The user, who tries to change the information stored in the IC card, such as credit card or bank cash card that the user possesses, inserts the IC card 100 into the IC card reader/writer connected to the user's apparatus as an information terminal such as a PC that the user maintains. Then, the user selects an information change mode as one of the applications for using the IC card 100 (step S210).

The change judging unit 130 of IC card 100 confirms the setting of change allowance information that is set to "changing" when the internal information of IC card 100 is correctly changed. If the change allowance information setting is not "changing", the information change is enabled, and the process goes to the next step. If the change allowance information is already registered as "changing", the information change is rejected at this time, and the process ends (step S220).

The user, according to the instruction displayed on the screen resulting from selecting the information change mode, enters one item of the information set not to be allowed to change. Here, it is assumed that a birth date has been entered as information which is not visually written on the card surface and which cannot be changed (step S230, S240).

The change judging unit 130 compares the inputted birth date information with the birth date information previously stored in the IC card 100, and checks if the entered information is correct. This comparing operation is performed within the IC card 100. Thus, if the IC card 100 is falsely acquired and used by others, this checking ability can prevent the fraudulent user from falsely reading the information that is already stored in an output-unable form in the card (step S250).

If the inputted information does not match the correct information at step S250, the process ends. If it matches, the change allowance information is set to "changing" within the IC card 100 (step S260). Then, the items of changeable information are displayed on the screen, urging the user to enter a desired item of information. At this time, on the screen is displayed no specific contents of items that are already stored in the IC card 100 (step S270).

Thus, the user enters information of a desired item according to the instruction on the screen. Here, a description will be made of the case where a new password is entered for change of password (step S271).

The information changing unit 120 registers inputted new information, or here new password into the card, and ends the process (step S272). At this time, the information used so far is left within the IC card 100 as before-change information. If much older information has already been stored, this former before-change information is deleted (step S280). Alternatively, a flag indicative of before-change information may be prepared, and the flag may be deleted from the former before-change information and added to the information used so far.

In addition, when the user tries to end the process without entering information at step S271, the information changing unit 120 releases the change allowance information from the set "changing" mode (step S290), and ends the process.

If, at the step S210, an application using the IC card 100 is selected other than for the information changing mode, this application is executed.

While in the above embodiment of the invention the change of information within the IC card is allowed when the user enters the information that is never changed and known by only the user (owner) holding the IC card, and when it coincides with the information stored within the IC card 100, the information to be entered by the owner is not limited to one item, but may be other information such as password that is valid at that time as one of the change allowance conditions. Therefore, the IC card 100 can be prevented from being illicitly used by others, or the safety of the IC card can be further improved. Thus, as described above, the IC card 100 with its internal information changed can be immediately used for off-line transaction on the basis of the new information.

While the change of information within the IC card 100 according to the invention is performed by connecting an IC card reader/writer to the information terminal such as PC, the above process may be made by providing a terminal for exclusive use. In addition, the registration of the change allowance information into the IC card 100 at step S260 may be made after the information of a desired item is received or after the input information is registered into the IC card 100. In that case, step S290 is not necessary.

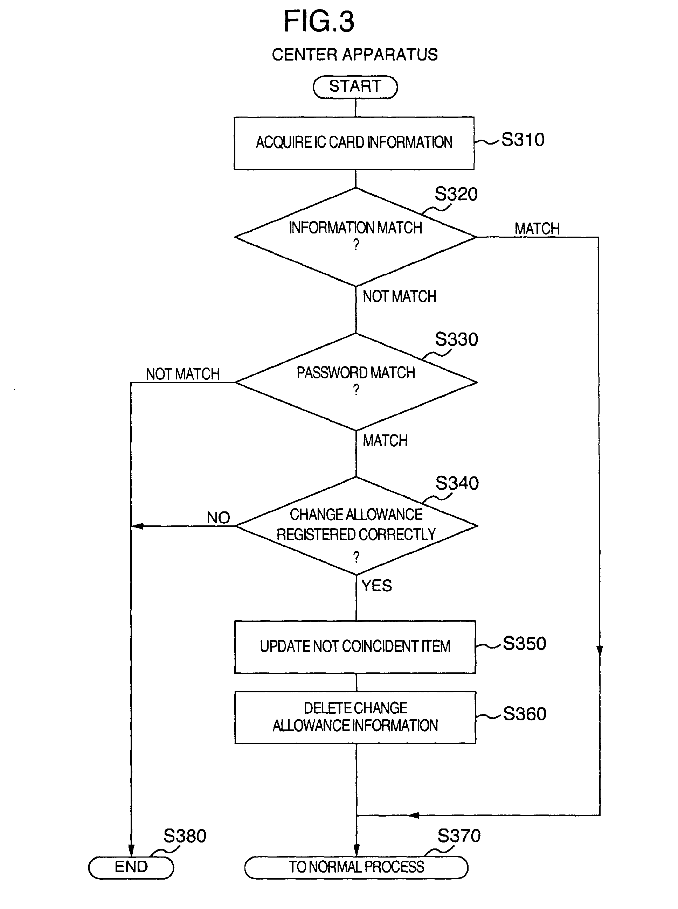

Fig. 3 is a flowchart showing the operation for the process in the center-side apparatus 300 (for example, the host that issued the IC card) when the IC card with the internal information changed by the user as described above is used for transaction. The user's information changed according to the flowchart of Fig. 2 is reflected on the center-side apparatus 300. This process will be described. The program for executing the process here can be provided by storing in a recording medium such as CD, MO or DVD.

When the on-line terminal 200 such as a shop and the center-side apparatus 300 that issued the IC card are connected at the time of an on-line transaction using the IC card 100, the card information is sent to the center-side apparatus 300 (step S310). The comparator 32 of the center-side apparatus 300 compares the information stored in the center DB 400 with the transmitted information, checking if they coincide (step S320). If there is no disagreement, the apparatus executes the normal process such as the process for transaction using this IC card 100, or other process than the change of the user's information registered in the database 400 and managed by the center side (step S370).

If disagreement occurs between those information at checking step S320, the comparator 320 further compares the before-change information of an item found not coincident, or the sent password in this embodiment with the password information stored within the center DB 400, checking if they coincide (step S330). If they are not coincident, the card is processed as abnormal, and the process ends. In this case, the center-side apparatus 300 informs the on-line terminal of the fact that the transaction cannot be handled, though not shown.

If the sent before-change information matches the information stored in the center DB at step S330, the change allowance confirming unit 310 checks if the change allowance information is already set to "changing" within the IC card (step S340). If the change allowance information is not set to "changing" or not correctly set, the card is processed as abnormal and the process ends in the same way as described above (step S380).

If the change allowance information is set to "changing" at step S340, the information changing unit 330 is operated so that the not coincident information of the item about which matching cannot be obtained (this information is new information that the user wants to change to, or a new password in this example) can be registered into the center DB 400 as after-change information (step 350), and that the set "changing" of the change allowance information within the IC card 100 can be released from, and the process ends (step S360).

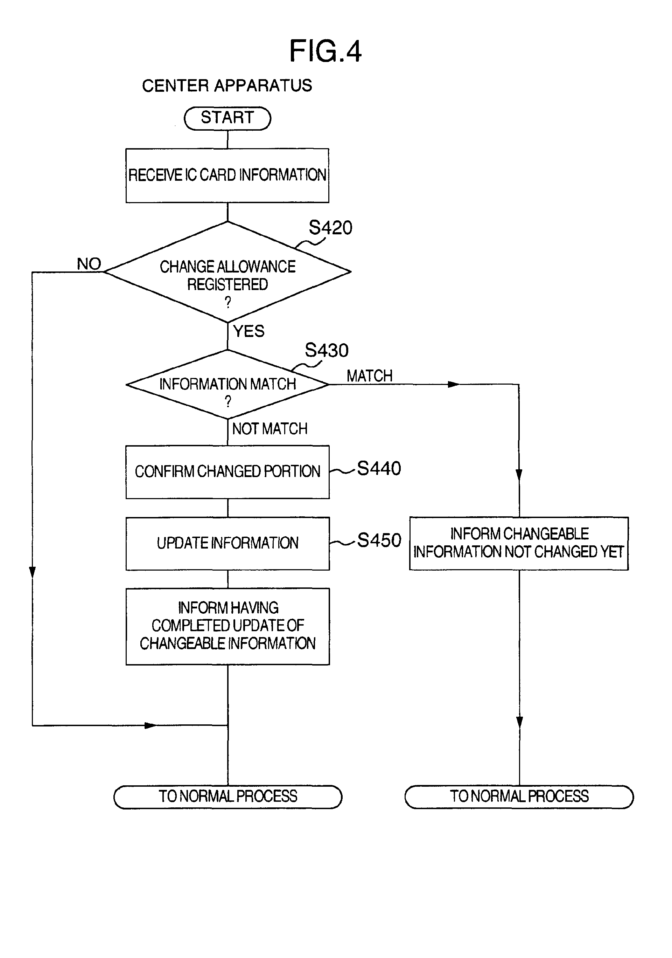

Or the following operations can be performed. As shown in Fig. 4, only the presence or absence of the change allowance information is confirmed (step S420). If the change allowance information is already registered, the information on the IC card 100 side is compared with that managed by the center-side apparatus 300 (step S430). Then, after the confirmation of the changed portion, the information is updated (step S440, S450).

In either case, the center-side apparatus 300 as the source of having issued the IC card 100, when the IC card 100 with its internal information changed is first used for transaction (for example, when it is first used for on-line transaction), makes the above process, thereby enabling the contents of the center DB 400 to be automatically updated.

According to the invention, the process of checking if the before-changing information matches the stored information at step S330 in Fig. 3 may be omitted so that the processes can be simplified. In this case, there is no need to provide step S330 in Fig. 3. Moreover, in the process mentioned with reference to Fig. 1, the changed information is not necessarily left.

According to the above embodiment of the invention, if information is set to be changeable within the IC card 100, these information can be changed by the user himself. This change, when the IC card 100 is first used for on-line transaction after the change, can be automatically reflected on the center-side apparatus 300.

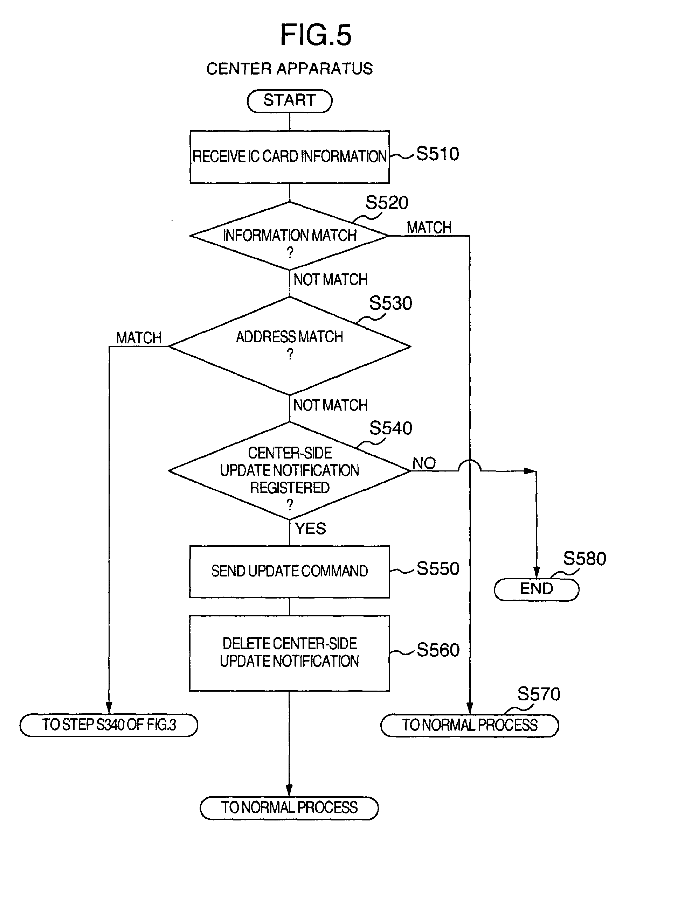

Fig. 5 is a flowchart for the process of reflecting the information change on the IC card 100 when the center-side apparatus changes the information contrary to the case shown in Figs. 2 to 4. The case in which the information change is first made on the center side can be considered specifically as, for example, the change of expiration date for card renewal, and the change of user's information about which the user having no his apparatus requests the center-side apparatus manager by mail or telephone for the reason of a move or the like. This process will be described below. It is assumed here that the information managed by the center-side apparatus 300 is already changed by the manager of the center-side apparatus 300, and that the address of the user is already changed by occasion of changing his place of residence. When the information on the center side is updated, however, the center-side apparatus 300 registers center-side update notification information, which indicates that information update has been made on the center side, into the DB400 in association with card identifying, or specifying information such as card number of the IC card of which the information is to be changed.

When an on-line transaction is conducted by use of the IC card 100, and when the on-line terminal 200 such as a cyber shop and the center-side apparatus 300 that issued the IC card 100 are connected together, the card information is sent to the center-side apparatus 300 (step S510). The center-side apparatus 300 compares the information stored in the center DB400 with the transmitted information, checking if they coincide with each other (step S520). If they match each other, the apparatus makes the normal process such as the process for the transaction using this IC card 100, or other process than the change of the user's information stored and managed on the center side (step S570).

If they are not coincident at step S520, the center-side apparatus 300 further compares the not coincident item of information, or information prior to change of address in this embodiment with the address information stored within the center DB400, checking if they coincide (step S530). If they coincide, the process goes to step S340 of Fig. 3 as described above. If they do not coincide, the center-side apparatus 300 checks if the center-side update notification information about the IC card is already registered (step S540).

If, at step S540, the center-side update notification information is found not to be registered, the center-side apparatus 300 considers the card as abnormal, and ends the process (step S580). If it is already registered, the center-side apparatus 300 sends update command information (such as update item, and contents of new information), deletes the center-side update notification information, and ends the update process (step S550, S560).

The information changing unit 120 of the IC card 100 receives the update command information, and updates the information within the IC card 100. Thus, if the information within the IC card 100 is set to be changeable, these information can also be changed by the command from the center side. When this IC card is first used for transaction after the change, this change can be automatically reflected on the IC card 100.

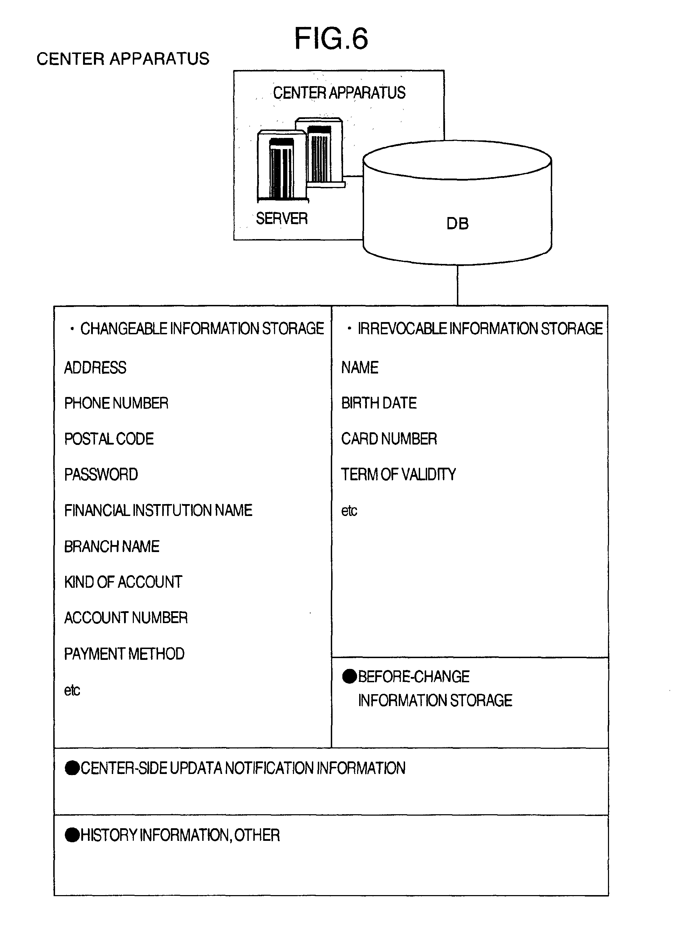

Fig. 6 is a diagram showing the contents of the center-side DB400. The center-side DB400 shown here adds a change-enable identifier to the information allowed to change, and a change-unable identifier to the information not allowed to change, and stores those information in changeable and not changeable forms, respectively. While address, postal code, phone number, password, financial institution name, branch name, kind of account, account number and payment method are given here as changeable information, and user name, birth date and card number as irrevocable information, this classification is not absolute, but may be arbitrary according to what the card company or user wants.

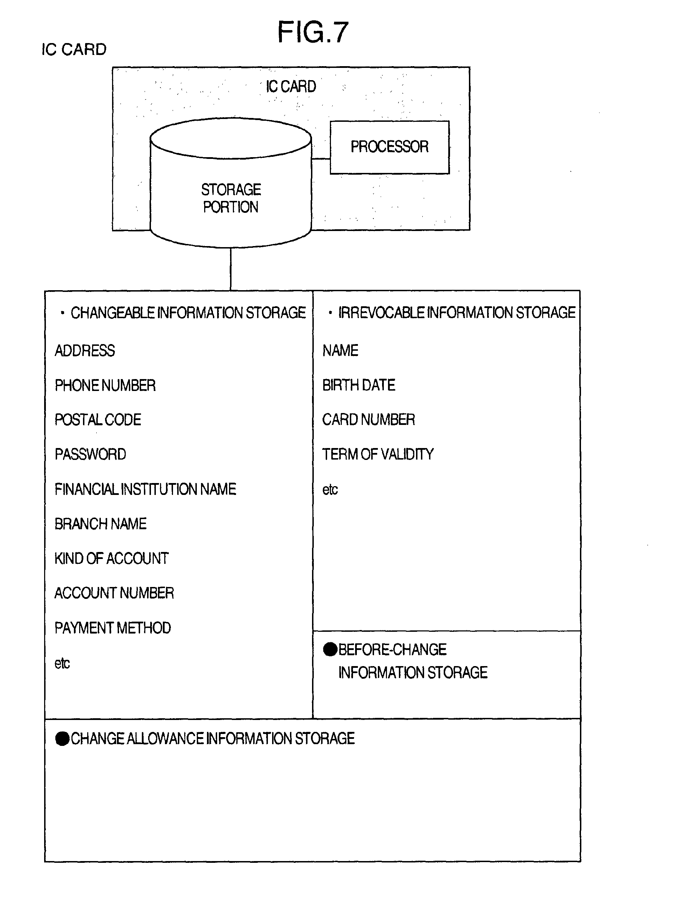

Fig. 7 is a diagram showing the contents of the storage portion 150 of the IC card 100. The IC card storage portion 150, as illustrated, has change-acceptable information added with change-enabling identifier and stored in a variable form, and has change-unacceptable information added with change-disabling identifier and stored in an invariable form. While address, postal code, phone number, password, financial institution name, branch name, kind of account, account number and payment method are given here as changeable information, and user name, birth date and card number as irrevocable information, this classification is not absolute, but may be arbitrary according to what the card company or user wants.

Thus, according to the present invention, the individual is able to easily change the password for security at any time, and this change can be reflected on the host side so that the total system security can be increased.

## Claims

1. A method of changing user's information in an IC card system including IC cards (100) each having stored therein said user's information formed of a plurality of items, and a center apparatus (300), said method comprising the steps of:
providing a recording area (150) in each of said IC cards such that change allowance information indicative of whether said user's information is in the process of changing or not can be registered in said recording area;
deciding (130), on said IC card-side, if said user's information is in the course of changing by referring to said change allowance information when a request for changing said user's information occurs to user's one of said IC cards;
setting (110) said change allowance information for "changing" on said IC card-side if said user's information is not in the course of changing;
receiving (140) an item of said user's information to be changed;
registering (110) said item in said user's IC card on said IC card-side;
sending (140) said changed user's information to said center apparatus;
receiving (340) and registering (330) said changed user's information on said center-side; and
resetting (330) said change allowance information of said user's IC card on said center-side.

2. A method according to claim 1, wherein said registering step (S280) registers said after-change item under the condition in which said before-change item is left.

3. A method of changing user's information in an IC card system that includes IC cards (100) each having said user's information stored, and a center apparatus (300), said method comprising the steps of:
providing a recording area (150) in each of said IC cards so that change allowance information indicative of whether said user's information is in the course of changing or not can be registered in said recording area;
deciding (130), on said IC card-side, if said user's information is in the course of changing or not by referring to said change allowance information when a request for changing said user's information occurs to user's one of said IC cards;
setting (110) (330) said change allowance information for "changing" if said user's information is not in the course of changing; and
receiving and registering (140, 120, 340, 330) an item of said user's information that should be changed.

4. A method according to claim 3, wherein said setting step (110) is performed when the side that requests for changing said user's information is not said center apparatus.

5. A method according to claim 4, wherein said change allowance information registered in said IC card-side and set for "changing" is reset by said center apparatus.

6. A method according to claim 5, wherein said user's information stored in said IC cards includes variable user's information set to accept change, and irrevocable user's information set to reject change.

7. A method according to claim 6, wherein said IC cards can receive predetermined information, and compare said predetermined information with said irrevocable user's information, and if the result is coincidence, said IC cards can register said item that should be changed.

8. A method according to claim 7, wherein said step of registering said item to be changed registers an after-change item under the condition in which said before-change item is left.

9. A method of changing user's information in an IC card system that includes IC cards (100) each having said user's information stored, and a center apparatus (300), said method comprising the steps, to be executed by said center apparatus, of:
receiving (S310) said user's information from said IC card-side;
comparing (S320) said received user's information with said user's information managed by said center apparatus;
reading (S310) the before-change information from said IC card-side if the comparison result is not coincidence;
updating (S350) said center-side managed user's information by said unconformable user's information if said before-change information matches said center-side managed user's information (S330, S340); and
write (S360), in said IC card, information indicative of having completed said change.

10. An IC card system that includes IC cards (100) each having stored therein user's information of a plurality of items, and a center apparatus (300) that transmits/receives information to/from said IC cards, each of said IC cards comprising:
a recording area (150) in which change allowance information indicative of whether said user's information is in the process of changing or not is registered;
a receiver (140) for receiving a request for changing said user's information;
a change judging unit (130) for deciding if said user's information is in the process of changing by referring to said change allowance information;
a change allowance information registering unit (110) for setting said change allowance information for "changing" if said user's information is not in the process of changing;
an information updating unit (120) for receiving an item of said user's information that should be changed, and registering said item in said IC card-side; and
a transmitter (140) for transmitting said changed user's information to said center apparatus, said center apparatus comprising:
a second receiver (340) for receiving said changed user's information; and
an information updating unit (330) for registering said changed user's information, and resetting said change allowance information set for "changing".

11. An IC card (100) having user's information stored, and transmitting/receiving information to/from a center apparatus (300), said IC card comprising:
a recording area (150) in which change allowance information indicative of whether said user's information is in the process of changing or not is registered;
a receiver (140) for receiving a request for changing said user's information;
a judging unit (130) for deciding if said user's information is in the process of changing by referring to said change allowance information;
a change allowance information registering unit (110) for setting said change allowance information for "changing" if said user's information is decided not to be in the process of changing; and
an information updating unit (120) for receiving and registering an item of said user's information that should be changed.
